# EUROPEAN PATENT APPLICATION

(11) **EP 3 439 388 A1**
(43) Date of publication of application: **06.02.2019**
(21) Application number: 16896057.3
(22) Date of filing: 01.04.2016
(51) Int. Cl.: H04W 72/00

(54) **RESOURCE ALLOCATION METHOD, DEVICE, AND COMMUNICATION SYSTEM**

(71) Applicant: Fujitsu Limited, Kawasaki-shi, Kanagawa 211-8588 (JP)
(72) Inventor: XI, Wei, Beijing 100025 (CN); ZHOU, Hua, Beijing 100025 (CN)
(74) Representative: Haseltine Lake LLP
(86) International application number: PCT/CN2016/078293
(87) International publication number: WO 2017/166277

(57) **Abstract**

A resource allocation method, apparatus and communication system. A base station allocates a priority for each resource unit in the resource pool, and notifies information on the priorities to a user equipment in its coverage, such that the user equipment may select a corresponding resource unit for its message to be transmitted (a V2X packet) according to the configuration information on the priorities of the resource units from the base station. Hence, the probability of resource collision can be lowered, and the latency can be ensured to be low.

## Description

### Field

This disclosure relates to the field of communications, and in particular to a resource allocation method, apparatus and communication system.

### Background

In recent years, vehicle to vehicle (V2V) communication has gradually become a hotspot of studies in the field of wireless communications. In the future, not only connection between vehicles can be made, but also vehicles can connect to the Internet freely. Such an "Internet of vehicles" is a completely new concept, and a large quantity of applications shall emerge, thereby outstandingly changing our lives. Hence, attention of a large number of research institutes and standardization organizations has been drawn to the "Internet of vehicles". Till now, a large quantity of V2V communication systems and projects, typically, Institute of Electrical and Electronics Engineers (IEEE) 802.11p dedicated short range communications (DSRC), and intelligent transportation systems (ITSs), etc., has emerged.

On the other hand, worldwide great success of long term evolution (LTE) and LTE-advanced systems has brought about new opportunities for the V2V communication, which makes it possible to connect the vehicles to the vehicles and connect vehicles to the Internet. As existing LTE/LTE-advanced support device to device (D2D) communication, a most direct scheme is to achieve vehicle-to-vehicle (V2V), vehicle-to-infrastructure/network (V2I/N) and vehicle-to-pedestrian (V2P) communication based on a PC5 interface of D2D, which are collectively defined as V2X communication.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

However, it was found by the inventors that in comparison with the D2D communication, the V2X communication requires lower latency and higher reliability. For example, the latency of the V2X communication is often required to be lower than 100 milliseconds; and as security is concerned in traffics of the V2X communication, requirements of the V2X communication are extremely rigorous and severe with respect to reliability. Facing such severe technical requirements, legacy mechanisms originally addressed to D2D communication need to be enhanced in every aspect, such as optimizing resource pool structures, reducing the probability of resource collisions, overcoming relatively large Doppler spread, and enhancing demodulation reference signals and synchronization signals, in which the problem of resource collisions is especially severe.

In order to lower the probability of resource collision and ensure low latency, embodiments of this disclosure provide a resource allocation method, apparatus and communication system.

In a first aspect of the embodiments of this disclosure, a resource allocation method is provided, the method being applicable to a base station, including:
allocating priorities for resource units in a resource pool; and
transmitting configuration information on the priorities of the resource units to a user equipment in a coverage of the base station.

In a second aspect of the embodiments of this disclosure, a resource allocation method is provided, the method being applicable to a user equipment, including:
determining a priority of a message to be transmitted; and
selecting a resource unit for transmitting the message to be transmitted from a resource pool according to configuration information on priorities of resource units in the resource pool from a base station.

In a third aspect of the embodiments of this disclosure, a resource allocation apparatus is provided, the apparatus being configured in a base station, including:
an allocating unit configured to allocate priorities for resource units in a resource pool; and
a transmitting unit configured to transmit configuration information on the priorities of the resource units to a user equipment in a coverage of the base station.

In a fourth aspect of the embodiments of this disclosure, a resource allocation apparatus is provided, the apparatus being configured in a user equipment, including:
a determining unit configured to determine a priority of a message to be transmitted; and
a selecting unit configured to select a resource unit for transmitting the message to be transmitted from a resource pool according to configuration information on priorities of resource units in the resource pool from a base station.

In a fifth aspect of the embodiments of this disclosure, a base station is provided, the base station including the apparatus as described in the third aspect.

In a sixth aspect of the embodiments of this disclosure, a user equipment is provided, the user equipment including the apparatus as described in the fourth aspect.

In a seventh aspect of the embodiments of this disclosure, a communication system is provided, the communication system including a base station and a user equipment; wherein,
the base station is configured to allocate priorities for resource units in a resource pool, and transmit configuration information on the priorities of the resource units to a user equipment in its coverage;
and the user equipment is configured to determine a priority of a message to be transmitted, and select a resource unit for transmitting the message to be transmitted from a resource pool according to configuration information on priorities of resource units in the resource pool from the base station.

An advantage of the embodiments of this disclosure exists in that with the method, apparatus or system of the embodiments of this disclosure, the probability of resource collision can be lowered, and the latency can be ensured to be low.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents in the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals assign corresponding parts throughout the several views and may be used to assign like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of the resource allocation method of Embodiment 1;
FIG. 2 is a schematic diagram of indicating configuration information on priorities by one-dimensional bitmaps;
FIG. 3 is a schematic diagram of indicating configuration information on priorities by two-dimensional bitmaps;
FIG. 4 is a schematic diagram of the resource allocation method of Embodiment 2;
FIG. 5 is a schematic diagram of the resource allocation apparatus resources of Embodiment 3;
FIG. 6 is a schematic diagram of a systematic structure of the base station of Embodiment 3;
FIG. 7 is a schematic diagram of the resource allocation apparatus of Embodiment 4;
FIG. 8 is a schematic diagram of a systematic structure of the user equipment of Embodiment 4; and
FIG. 9 is a schematic diagram of the communication system of Embodiment 5.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. Various embodiments of this disclosure shall be described below with reference to the accompanying drawings. Such embodiments are illustrative only, and are intended to limit this disclosure.

In this disclosure, a base station may be referred to as an access point, a broadcast transmitter, a node B, or an evolution node B (eNB), etc., and may include some or all functions of them. A term "base station" shall be used in the text, and each base station provides communication coverage for a specific geographical region.

In this disclosure, a mobile station or equipment may be referred to as a user equipment (UE). The UE may be fixed or mobile, and may also be referred to as a mobile station, a terminal, an access terminal, a user unit, or a station, etc. The UE may be a cellular phone, a personal digital assistant (PDA), a wireless modem, a wireless communication device, a handhold device, a lap-top computer, a cordless telephone, and a vehicle, etc.

As described above, as the existing D2D resource allocation mechanisms cannot meet requirements for V2X communication, the embodiments of this disclosure provide a new resource allocation scheme. In the embodiments of this disclosure, the base station allocates a priority for each resource unit in a resource pool, and then notifies information on the priority to a user equipment in its coverage via signaling. And correspondingly, the user equipment first determines a priority of a V2X packet before transmitting the packet, and then selects corresponding resource units according to the information on the priority of the resource unit from the base station.

The embodiments of this disclosure shall be described below with reference to the accompanying drawings.

### Embodiment 1

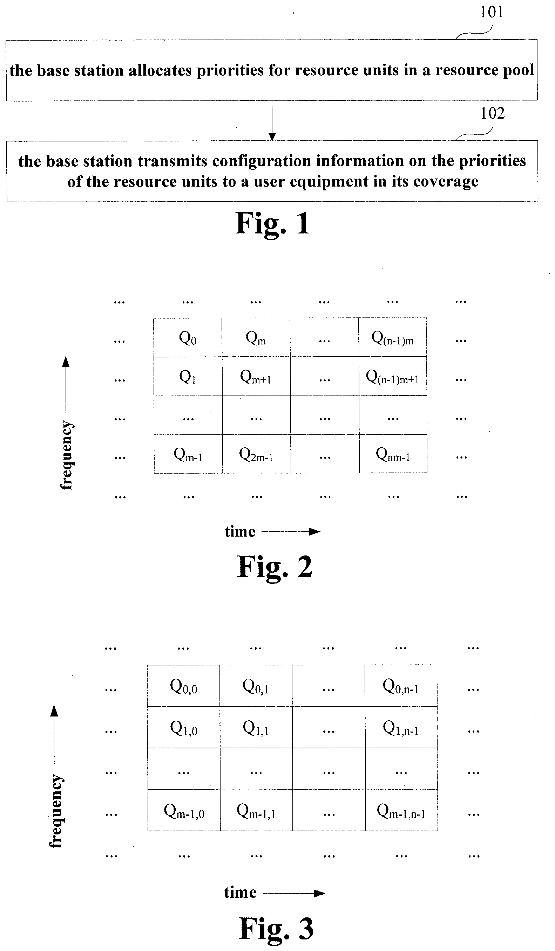

This embodiment provides a resource allocation method, applicable to a base station. FIG. 1 is a schematic diagram of the method of this embodiment. As shown in FIG. 1, the method includes:
step 101: the base station allocates priorities for resource units in a resource pool; and
step 102: the base station transmits configuration information on the priorities of the resource units to a user equipment in its coverage.

In this embodiment, the user equipment may be, for example, a terminal of the above-described Internet of vehicles. However, this disclosure is not limited thereto; for example, the user equipment may also be a terminal of another network system. The embodiments of this disclosure shall be described by taking the Internet of vehicles as an example only. However, this disclosure is not limited thereto, and it is applicable to any system performing resource allocation.

In this embodiment, the base station may be a macro base station (such as an eNB), and the user equipment may be served by macro cells generated by the macro base station. And the base station in the embodiments of this disclosure may also be a pico base station, and the UE may be served by pico cells generated by the pico base station. However, the embodiment of this disclosure is not limited thereto, and a particular scenario may be determined according to actual needs.

In this embodiment, the base station allocates a priority for each resource unit in the resource pool, and then notifies the information on the priority to the user equipment in its coverage via signaling. Hence, the user equipment may select corresponding resource units for a message to be transmitted (a V2X packet) according to the information on the priority of the resource unit from the base station, thereby lowering the probability of resource collision and ensuring low latency.

In this embodiment, the base station allocates the priority for the resource units in the resource pool, which may be performed in a static manner or a semi-static manner or a dynamic manner, which is not limited in this embodiment. The resource pool here refers to a resource pool used for V2X communication, and only this resource pool shall be described in this embodiment. And other resource pools, such as a resource pool for LTE communication, are not limited in this embodiment.

In this embodiment, the priority may be expressed by a grade, and a resource unit of a higher priority may provide more reliable transmission. The number of grades of priorities and the number of resource units of each priority are dependent on service types, payload conditions, and a size of the resource pool, or the like, of the user equipment in a coverage of a cell. Moreover, resource units of equal priorities may be centralized and continuous or discrete and discontinuous.

In this embodiment, the priority may also be of a broader concept. For example, the priority may also be expressed by a resource feature, different resource units in the resource pool may be differentiated by different resource features, and resource units having identical resource features are equivalent to having identical priorities.

In this embodiment, manners for allocating the priorities for the resource units at least include the following:
a random allocation manner;
an allocation manner based on resource overlapping;
an allocation manner based on utilization of the resource units; and
an allocation manner based on power.

In a particular implementation process, the base station may select one or more or any combination of the above four manners to allocate the priorities for the resource units in the resource pool.

As for the random allocation manner, the base station may randomly allocate a priority for each resource unit in the resource pool. For example, it is assumed that the number of grades of the priorities is 8, that is, the priorities have eight grades, and then the base station may randomly allocate one of the eight priorities for each resource unit in the resource pool.

As for the allocation manner based on resource overlapping, the base station may implement allocation of different priorities by mutual overlapping of resource units. For example, a resource unit with a relatively small overlapped part has a higher priority than a resource unit with a relatively large overlapped part. That is, a resource unit with fewer overlapping parts has higher priority, and a resource unit with more overlapping parts have lower priority. Thus, in a case where the number of grades of the priorities is determined, the base station may allocate priorities for the resource units according to the overlapping situations of the resource units.

As for the allocation manner based on utilization of the resource units, the base station may allocate priorities for the resource units according to the utilization of the resource units. For example, a resource unit with a relatively high utilization has a relatively low priority, and vice versa. Thus, in a case where the number of grades of the priorities is determined, the base station may allocate priorities for the resource units according to the utilization of the resource units.

And as for the allocation manner based on power, the base station may allocate priorities for the resource units according to power of the resource units. For example, a resource unit with relatively high power has a relatively high priority, and vice versa. Thus, in a case where the number of grades of the priorities is determined, the base station may allocate priorities for the resource units according to the power of the resource units.

The foregoing four priority allocation manners are illustrative only. And in a particular implementation process, the base station may allocate priorities for the resource units according to other policies. For example, if the priorities are expressed by resource features, the base station may allocate priorities for the resource units according to the resource features of the resource units, which shall not be described herein any further.

In this embodiment, after allocating priorities for the resource units in the resource pool, the base station may notify the configuration information on the priority of the resource unit to the user equipment in its coverage. In this embodiment, the base station may transmit the configuration information on the priorities of the resource units to the user equipment in its coverage via downlink physical layer signaling, or may transmit the configuration information on the priorities of the resource units to the user equipment in its coverage via higher layer signaling, such as radio resource control (RRC) signaling, and this embodiment is not limited thereto.

In this embodiment, the configuration information on priorities may be indicated by one-dimensional bitmaps, or may be indicated by two-dimensional bitmaps.

FIG. 2 is a schematic diagram of indicating the configuration information on priorities by one-dimensional bitmaps. As shown in FIG. 2, its length is equal to the number of resource units in the resource pool. For example, *P*₁ = (*Q*₀, *Q*₁, ..., *Q*_{*m-*1}, *Qₘ*, *Q*_{*m*+1}, ..., *Q*_{*nm*-1}); where, *Q*_{*lm*+*k*} denotes a priority of a resource unit (*k,l*) in the resource pool, 0≤*k*<*m*, and 0≤*l*<*n*, *m* and *n* being sizes of the resource pool in a frequency domain and a time domain, respectively.

FIG. 3 is a schematic diagram of indicating the configuration information on priorities by two-dimensional bitmaps. As shown in FIG. 3, it is a matrix of a size of m×n, and its element *Q_{k,l}* denotes a priority of a resource unit (*k,l*) in the resource pool, 0≤*k*<*m*, and 0≤*l*<*n*, m and n being sizes of the resource pool in a frequency domain and a time domain, respectively.

With the method of this embodiment, the base station allocates priority for each resource unit in the resource pool, and notifies information on the priorities to the user equipment in its coverage via signaling, such that the user equipment may select a corresponding resource unit for a message to be transmitted (a V2X packet) according to the configuration information on the priorities of the resource units from the base station. Hence, the probability of resource collision can be lowered, and the latency can be ensured to be low.

### Embodiment 2

This embodiment provides a resource allocation method, applicable to a user equipment, which is processing at a user equipment side corresponding to the method of Embodiment 1, with contents identical to those in Embodiment 1 being not going to be described herein any further.

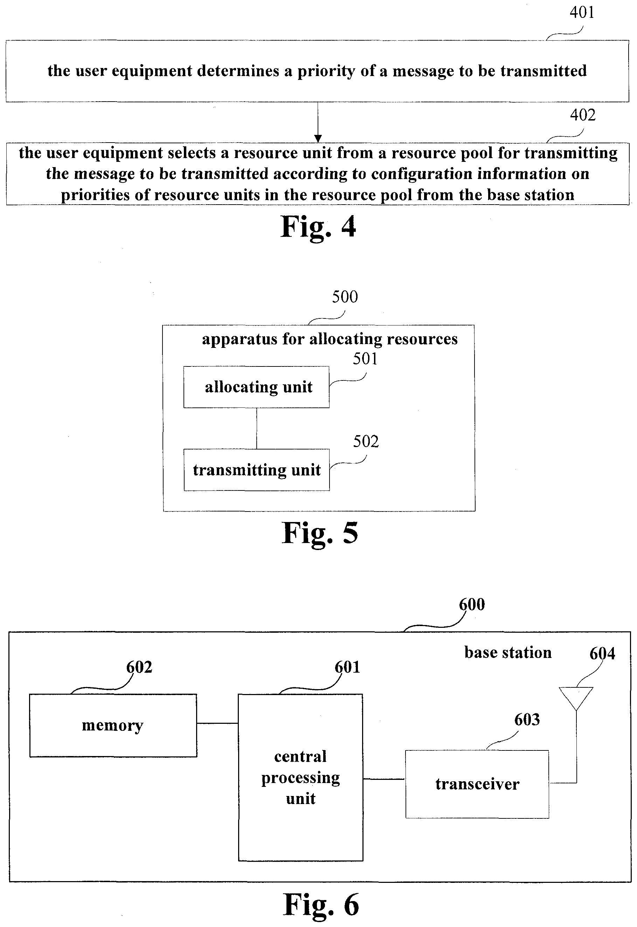

FIG. 4 is a schematic diagram of an implementation of the method of this embodiment. As shown in FIG. 4, the method includes:
step 401: the user equipment determines a priority of a message to be transmitted; and
step 402: the user equipment selects a resource unit for transmitting the message to be transmitted from a resource pool according to configuration information on priorities of resource units in the resource pool from the base station.

In this embodiment, the user equipment first determines the priority of the message to be transmitted (a V2X packet), then selects a needed resource unit from the resource pool according to the configuration information on priorities of resource units in the resource pool from the base station, and transmits the message to be transmitted, thereby lowering the probability of resource collision and ensuring low latency.

In step 401, the user equipment may determine the priority of the message to be transmitted according to one or more or any combination of the following factors:
importance or urgency of the message to be transmitted;
a modulation and coding scheme of the message to be transmitted;
a size of the message to be transmitted;
a moving speed of the user equipment;
dedicated configuration signaling from the base station; and
a type of the user equipment.

As for determining the priority of the message to be transmitted according to the importance or urgency of the message to be transmitted, for example, the user equipment may determine that a priority of an important and/or urgent message is higher than priorities of other messages.

As for determining the priority of the message to be transmitted according to the modulation and coding scheme adopted by the message to be transmitted, for example, the user equipment may determine that a priority of a message adopting a high-order modulation and coding scheme is higher than a priority of a message adopting a lower modulation coding scheme.

As for determining the priority of the message to be transmitted according to a size of the message to be transmitted, for example, the user equipment may determine that a priority of a larger message is higher than a priority of a smaller message. In this embodiment, "a message size" may also be a relative size with respect to a needed resource unit; for example, the needed resource unit may be a product of a size of a single resource unit and the number of the resource units.

As for determining the priority of the message to be transmitted of the user equipment according to the moving speed of the user equipment, taking that the user equipment is a vehicle user equipment as an example, the user equipment may determine the priority of the message to be transmitted according to its own moving speed; for example, a priority of vehicle user equipment traveling at a high speed is higher than a priority of vehicle user equipment traveling at a lower speed.

As for determining the priority of the message to be transmitted of the user equipment according to the dedicated configuration signaling from the base station, the user equipment may determine the priority of its message to be transmitted according to configuration of its serving base station.

As for determining the priority of the message to be transmitted of the user equipment according to the type of the user equipment, the type of the user equipment may include, for example, vehicle user equipment, and roadside unit user equipment, or the like, and the roadside unit user equipment may include a roadside unit of a base station type (eNB type) and a roadside unit of a user equipment type (UE type). Usually, the roadside unit may be granted a priority higher than an independent vehicle, while for roadside units, a roadside unit being connected with more vehicle user equipment has a higher priority than that of a roadside with being connected with fewer vehicle user equipment. Therefore, the user equipment may determine the priority of its message to be transmitted according to a type of a device to which it belongs.

In this embodiment, similar to the priority of the resource unit, the priority of the message to be transmitted may also be expressed by a grade, or may be expressed by a resource feature, which shall not be described herein any further.

In step 402, the priority of the message to be transmitted is determined, and the user equipment may select a resource unit for the message to be transmitted according to the configuration information on the priorities of the resource units from the base station.

In an embodiment, as described above, the base station may perform the configuration of the priority of the resource unit in a static or semi-static or dynamic manner, and notify the user equipment, hence, the user equipment may obtain the configuration information on the priorities of the resource units in the resource pool, and based on this, select a corresponding resource unit according to the priority of the message to be transmitted of itself.

In this embodiment, the user equipment may select a resource unit with a priority equal to or not higher than the priority of the message to be transmitted from the resource pool, thereby avoiding resource waste and lowering the probability of resource collision as possible.

In this embodiment, if resource units in the resource pool meeting the priority requirements are more than required, the user equipment may randomly select a demanded number of resource units from these resource units, or select a demanded number of resource units with relatively better channel qualities from these resource units, which are not limited in this embodiment.

In this embodiment, if resource units in the resource pool meeting the priority requirements are inadequate, the user equipment may first select resource units meeting the priority requirements, and then additionally select a required number of resource units with priorities higher than or lower than the demanded priorities from the resource pool. And a particular selection policy is dependent on configuration of the base station or default actions of the user equipment, which is not limited in this embodiment.

In this embodiment, after selecting the resource unit used for transmitting the message to be transmitted, the user equipment may transmit the message to be transmitted via the selected resource unit, and a particular manner of transmission is not limited in this embodiment.

With the method of this embodiment, the user equipment may select a corresponding resource unit for the message to be transmitted (a V2X packet) according to the configuration information on the priorities of the resource units from the base station. Hence, the probability of resource collision can be lowered, and the latency can be ensured to be low.

### Embodiment 3

This embodiment provides a resource allocation apparatus, configured in a base station. As principles of the apparatus for solving problems are similar to that of the method in Embodiment 1, reference may be made to the implementation of the method in Embodiment 1 for implementation of the apparatus, with identical contents being not going to be described herein any further.

FIG. 5 is a schematic diagram of the resource allocation apparatus. As shown in FIG. 5, a resource allocation apparatus 500 includes an allocating unit 501 and a transmitting unit 502.

In this embodiment, the allocating unit 501 is configured to allocate priorities for resource units in a resource pool, and the transmitting unit 502 is configured to transmit configuration information on the priorities of the resource units to a user equipment in a coverage of the base station.

In this embodiment, the allocating unit 501 may allocate the priorities for the resource units in the resource pool in one or more or any combination of the following manners:
a random allocation manner;
an allocation manner based on resource overlapping;
an allocation manner based on utilization of the resource units; and
an allocation manner based on power.

Particulars are as described above, and shall not be described herein any further.

In this embodiment, for the allocation manner based on resource overlapping, priorities of resource units with relatively less overlapped parts are higher than those of resource units with relatively more overlapped parts.

In this embodiment, the priorities may be expressed by grades, or may be expressed by resource features. And in a implementations where the priorities are expressed by resource features, the allocating unit 501 may differentiate the resource units in the resource pool by different resource features.

In this embodiment, the transmitting unit 502 may transmit the configuration information on the priorities of the resource units to the user equipment in the coverage of the base station via physical layer signaling or higher layer signaling. In this embodiment, the configuration information on the priorities may be indicated by one-dimensional bitmaps or by two-dimensional bitmaps.

With the apparatus of this embodiment, the base station allocates a priority for each resource unit in the resource pool, and notifies information on the priorities to the user equipment in its coverage, such that the user equipment may select a corresponding resource unit for a message to be transmitted (a V2X packet) according to the configuration information on the priorities of the resource units from the base station. Hence, the probability of resource collision can be lowered, and the latency can be ensured to be low.

This embodiment further provides a base station, configured with the apparatus 500 for allocating resources as described above.

FIG. 6 is a schematic diagram of a structure of the base station of the embodiment of this disclosure. As shown in FIG. 6, a base station 600 may include a central processing unit (CPU) 601 and a memory 602, the memory 602 being coupled to the central processing unit 601. In an embodiment, the memory 602 may store various data, and furthermore, it may store a program for data processing, and execute the program under control of the central processing unit 601, so as to receive various information transmitted by the user equipment, and transmit request information to the user equipment.

In one implementation, the functions of the apparatus 500 for allocating resources may be integrated into the central processing unit 601. In an embodiment, the central processing unit 601 may be configured to carry out the resource allocation method as described in Embodiment 1.

For example, the central processing unit 601 may be configured to: allocate priorities for resource units in a resource pool; and transmit configuration information on the priorities of the resource units to the user equipment in a coverage of the base station.

In another implementation, the apparatus 500 for allocating resources and the central processing unit 601 may be configured separately. For example, the apparatus 500 for allocating resources may be configured as a chip connected to the central processing unit 601, with its functions being realized under control of the central processing unit 601.

Furthermore, as shown in FIG. 6, the base station 600 may include a transceiver 603, and an antenna 604, etc. In an embodiment, functions of the above components are similar to those in the related art, and shall not be described herein any further. It should be noted that the base station 600 does not necessarily include all the parts shown in FIG. 6, and furthermore, the base station 600 may include parts not shown in FIG. 6, and the related art may be referred to.

With this embodiment, the base station allocates a priority for each resource unit in the resource pool, and notifies information on the priorities to the user equipment in its coverage via signaling, such that the user equipment may select a corresponding resource unit for a message to be transmitted (a V2X packet) according to the configuration information on the priorities of the resource units from the base station. Hence, the probability of resource collision can be lowered, and the latency can be ensured to be low.

### Embodiment 4

This embodiment provides a resource allocation apparatus, configured in a user equipment. As principles of the apparatus for solving problems are similar to that of the method in Embodiment 2, reference may be made to the implementation of the method in Embodiment 2 for implementation of the apparatus, with identical contents being not going to be described herein any further.

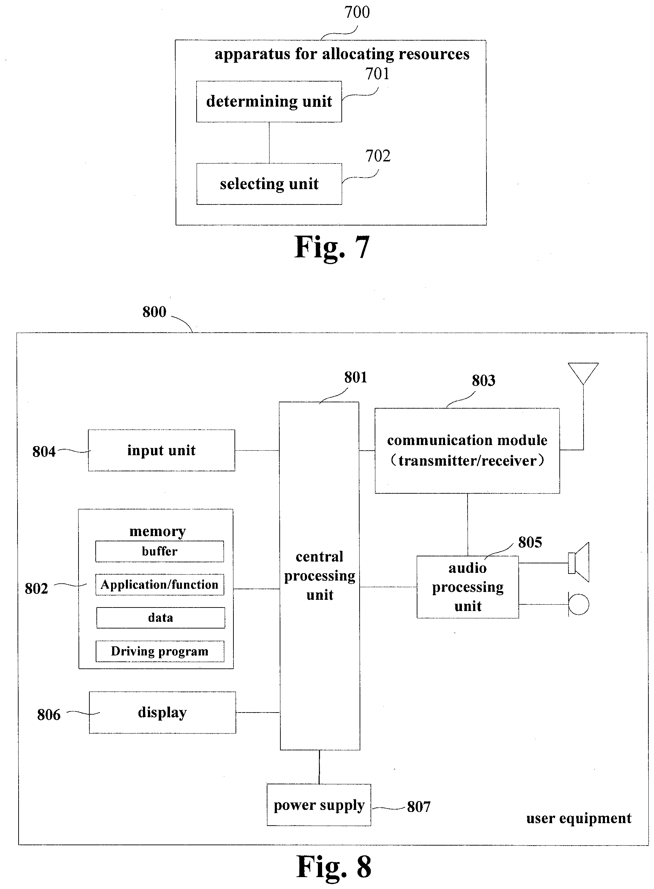

FIG. 7 is a schematic diagram of the resource allocation apparatus. As shown in FIG. 7, a resource allocation apparatus 700 includes a determining unit 701 and a selecting unit 702.

In this embodiment, the determining unit 701 is configured to determine a priority of a message to be transmitted, and the selecting unit 702 is configured to select a resource unit for transmitting the message to be transmitted from a resource pool according to configuration information on priorities of resource units in the resource pool from the base station.

In this embodiment, the determining unit 701 may determine the priority of the message to be transmitted according to one or more or any combination of the following factors:
importance or urgency of the message to be transmitted;
a modulation and coding scheme of the message to be transmitted;
a size of the message to be transmitted;
a moving speed of the user equipment;
dedicated configuration signaling from the base station; and
a type of the user equipment.

Particulars are as described above, and shall not be described herein any further.

In this embodiment, similar to the priorities of the resource units, the priority of the message to be transmitted may be expressed by a grade, or may be expressed by a resource feature, which shall not be described herein any further.

In this embodiment, the selecting unit 702 may select a resource unit with priority equal to or not higher than that of the message to be transmitted from the resource pool.

If resource units in the resource pool meeting the priority requirements are more than required, the selecting unit 702 may randomly select a required number of resource units from these resource units, or select a demanded number of resource units with relatively better channel qualities from these resource units.

If resource units in the resource pool meeting the priority requirements are inadequate, the selecting unit 702 may first select resource units meeting the priority requirements, and then additionally select a required number of resource units with priorities higher than or lower than the demanded priorities from the resource pool.

With the apparatus of this embodiment, the user equipment may select a corresponding resource unit for the message to be transmitted (a V2X packet) according to the configuration information on the priorities of the resource units from the base station. Hence, the probability of resource collision can be lowered, and the latency can be ensured to be low.

This embodiment further provides a user equipment, configured with the apparatus 700 for allocating resources as described above.

FIG. 8 is a schematic diagram of a structure of the user equipment of the embodiment of this disclosure. As shown in FIG. 8, a user equipment 800 may include a central processing unit 801 and a memory 802, the memory 802 being coupled to the central processing unit 801. It should be noted that this figure is illustrative only, and other types of structures may also be used, so as to supplement or replace this structure and achieve a telecommunications function or other functions.

In one implementation, the functions of the apparatus 700 for allocating resources may be integrated into the central processing unit 801. In an embodiment, the central processing unit 801 may be configured to carry out the resource allocation method as described in Embodiment 2.

For example, the central processing unit 801 may be configured to: determine a priority of a message to be transmitted; and select a resource unit for transmitting the message to be transmitted from a resource pool according to configuration information on priorities of resource units in the resource pool from the base station.

In another implementation, the apparatus 700 for allocating resources and the central processing unit 801 may be configured separately. For example, the apparatus 700 for allocating resources may be configured as a chip connected to the central processing unit 801, with its functions being realized under control of the central processing unit 801.

As shown in FIG. 8, the user equipment 800 may further include a communication module 803, an input unit 804, an audio processing unit 805, a display 806, and a power supply 807. It should be noted that the user equipment 800 does not necessarily include all the parts shown in FIG. 8, and furthermore, the user equipment 800 may include parts not shown in FIG. 8, and the related art may be referred to.

As shown in FIG. 8, the central processing unit 801 is sometimes referred to as a controller or control, which may include a microprocessor or other processor devices and/or logic devices, and the central processing unit 801 receives an input and controls operations of every component of the user equipment 800.

In an embodiment, the memory 802 may be, for example, one or more of a buffer memory, a flash memory, a hard drive, a mobile medium, a volatile memory, a nonvolatile memory, or other suitable devices, which may store various information, and furthermore, store programs executing related information. And the central processing unit 801 may execute programs stored in the memory 802, so as to realize information storage or processing, etc. Functions of other parts are similar to those of the related art, which shall not be described herein any further. The parts of the user equipment 800 may be realized by specific hardware, firmware, software, or any combination thereof, without departing from the scope of the present disclosure.

With the UE of this embodiment, the user equipment may select a corresponding resource unit for the message to be transmitted (a V2X packet) according to the configuration information on the priorities of the resource units from the base station. Hence, the probability of resource collision can be lowered, and the latency can be ensured to be low.

### Embodiment 5

This embodiment provides a communication system, including the base station as described in Embodiment 3 and the user equipment as described in Embodiment 4.

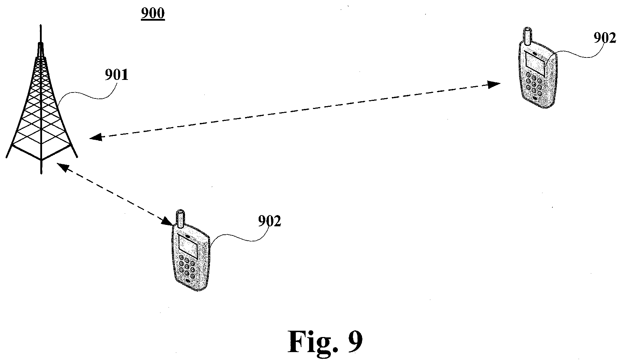

FIG. 9 is a schematic diagram of a structure of the communication system of the embodiment of this disclosure. As shown in FIG. 9, a communication system 900 includes a base station 901 and a user equipment 902; wherein, the base station 901 may be the base station 600 as described in Embodiment 3, and the user equipment 902 may be the user equipment 800 as described in Embodiment 4.

For example, the base station 901 may be configured to allocate priorities for resource units in a resource pool, and transmit configuration information on the priorities of the resource units to a user equipment in its coverage; and the user equipment 902 may be configured to determine a priority of a message to be transmitted, and select a resource unit for transmitting the message to be transmitted from a resource pool according to configuration information on priorities of resource units in the resource pool from the base station.

As the base station and the user equipment have been described in detail in the above embodiments, the contents of which are incorporated herein, which shall not be described herein any further.

With the communication system of this embodiment, the base station allocates a priority for each resource unit in the resource pool, and notifies information on the priorities to the user equipment in its coverage via signaling, such that the user equipment may select a corresponding resource unit for a message to be transmitted (a V2X packet) according to the configuration information on the priorities of the resource units from the base station. Hence, the probability of resource collision can be lowered, and the latency can be ensured to be low.

An embodiment of the present disclosure provides a computer readable program, which, when executed in a resource allocation apparatus or a base station, will cause the resource allocation apparatus or the base station to carry out the resource allocation method as described in Embodiment 1.

An embodiment of the present disclosure provides a computer storage medium, including a computer readable program, which will cause a resource allocation apparatus or a base station to carry out the resource allocation method as described in Embodiment 1.

An embodiment of the present disclosure provides a computer readable program, which, when executed in a resource allocation apparatus or a user equipment, will cause the resource allocation apparatus or the user equipment to carry out the resource allocation method as described in Embodiment 2.

An embodiment of the present disclosure provides a computer storage medium, including a computer readable program, which will cause a resource allocation apparatus or a user equipment to carry out the resource allocation method as described in Embodiment 2.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory.

The method/apparatus described with reference to the embodiments of this disclosure may be directly embodied as hardware, software modules executed by a processor, or a combination thereof. For example, one or more functional block diagrams and/or one or more combinations of the functional block diagrams shown in FIG. 5 or 7 may either correspond to software modules of procedures of a computer program, or correspond to hardware modules. Such software modules may respectively correspond to the steps shown in FIG. 1 or 4. And the hardware module, for example, may be carried out by firming the soft modules by using a field programmable gate array (FPGA).

The soft modules may be located in an RAM, a flash memory, an ROM, an EPROM, and an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 5 or 7 (such as allocating unit and transmitting unit, or determining unit and selecting unit) may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 5 or 7 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A resource allocation apparatus, configured in a base station, the apparatus comprising:
an allocating unit configured to allocate priorities for resource units in a resource pool; and
a transmitting unit configured to transmit configuration information on the priorities of the resource units to a user equipment in a coverage of the base station.

2. The apparatus according to claim 1, wherein the allocating unit allocates the priorities for the resource units in the resource pool in one or more or any combination of the following manners:
a random allocation manner;
an allocation manner based on resource overlapping;
an allocation manner based on utilization of the resource units; and
an allocation manner based on power.

3. The apparatus according to claim 2, wherein for the allocation manner based on resource overlapping, priorities of resource units with relatively less overlapped parts are higher than those of resource units with relatively more overlapped parts.

4. The apparatus according to claim 1, wherein the priorities refer to different resource features, and the allocating unit differentiates the resource units in the resource pool according to the different resource features.

5. The apparatus according to claim 1, wherein the transmitting unit transmits the configuration information on the priorities of the resource units to the user equipment in the coverage of the base station via physical layer signaling or higher layer signaling.

6. The apparatus according to claim 5, wherein the configuration information on the priorities is indicated by one-dimensional bitmaps or by two-dimensional bitmaps.

7. A resource allocation apparatus, configured in a user equipment, the apparatus comprising:
a determining unit configured to determine a priority of a message to be transmitted; and
a selecting unit configured to select a resource unit for transmitting the message to be transmitted from a resource pool according to configuration information on priorities of resource units in the resource pool from the base station.

8. The apparatus according to claim 7, wherein the determining unit determines the priority of the message to be transmitted according to one or more or any combination of the following factors:
importance or urgency of the message to be transmitted;
a modulation and coding scheme of the message to be transmitted;
a size of the message to be transmitted;
a moving speed of the user equipment;
dedicated configuration signaling from the base station; and
a type of the user equipment.

9. The apparatus according to claim 7, wherein the selecting unit selects a resource unit with priority equal to or not higher than the priority of the message to be transmitted from the resource pool.

10. The apparatus according to claim 9, wherein if resource units in the resource pool meeting the priority requirements are more than required, the selecting unit randomly selects a required number of resource units from these resource units, or selects a demanded number of resource units with relatively better channel qualities from these resource units.

11. The apparatus according to claim 9, wherein if resource units in the resource pool meeting the priority requirements are inadequate, the selecting unit first selects resource units meeting the priority requirements, and then additionally selects a required number of resource units with priorities higher than or lower than the demanded priorities from the resource pool.

12. A communication system, comprising a base station and a user equipment; wherein,
the base station is configured to allocate priorities for resource units in a resource pool, and transmit configuration information on the priorities of the resource units to a user equipment in its coverage;
and the user equipment is configured to determine a priority of a message to be transmitted, and select a resource unit for transmitting the message to be transmitted from a resource pool according to the configuration information on priorities of resource units in the resource pool from the base station.
